# EUROPEAN PATENT APPLICATION

(11) **EP 4 671 087 A1**
(43) Date of publication of application: **31.12.2025**
(21) Application number: 24184086.7
(22) Date of filing: 24.06.2024
(51) Int. Cl.: B62B 3/00, B62B 3/02, B62B 3/08, B62B 3/18, B66F 9/06, B66F 9/07

(54) **A UNIT FOR MOVING A CONTAINER**

(71) Applicant: AutoStore Technology AS, 5578 Nedre Vats (NO)
(72) Inventor: Heggebø, Jørgen, 5578 Nedre Vats (NO)
(74) Representative: Kilburn & Strode LLP

(57) **Abstract**

The disclosure relates to a unit for moving at least one container when in a movement configuration, the unit having an open top for inserting or extracting a container in a substantially vertical direction when in an insertion/extraction configuration, wherein the unit is arranged to allow a container to be extracted from the unit via at least one lateral side of said unit, wherein the unit comprises a container support surface having a tilt angle arranged to tilt a container at an angle to the insertion/extraction direction when the unit is in the movement configuration.

## Description

### TECHNICAL FIELD

The disclosure relates to units for moving containers. More particularly, it relates to automated storage and retrieval systems with ports suitable for the extraction and insertion of containers from and to the automated storage and retrieval system, wherein the port is arranged to receive a unit for moving containers outside of the automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In some cases, it is necessary to transport containers outside of the grid. For example, a container may be delivered to a port or station at the periphery of the grid, at which point a human or robotic operator extracts the container from the system. This may be for example for transport purposes, maintenance, cleaning, repair, or for continued used within a goods supply chain. For example, the container may be extracted from the system and loaded into a vehicle for delivery to an end customer.

In many cases, extraction of the container from the automated storage and retrieval system involves onward transportation of the container. The containers are often too heavy or bulky for a human to carry, and it is desirable to stack containers (in the same manner that they may be stacked when stored in the grid) for transportation.

Some known solutions for transporting containers outside of the grid involve wheeled-trolleys upon which containers may be vertically stacked. It is desirable to have easy access to the trolleys for ease of loading and unloading the containers. For example, it is preferable to able to laterally load and unload the trolley from a side of the trolley, rather than only vertically loading or unloading. However, it is also desirable to provide stability to the vertical stacks of containers to prevent slip or collapse of the stack. One solution for preventing containers slipping or falling of the stack is to provide sidewalls to the trolley. However, this solution can be in direct contention with the desire to be able to easily load the trolley laterally.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a unit for moving one or more containers according to an embodiment of the present disclosure in a movement configuration;
Fig. 6a shows the unit of Fig. 5 in an insertion/extraction configuration and further shows a port of an automated storage and retrieval system according to an embodiment of the present disclosure;
Fig. 6b shows a perspective view of the unit and port depicted in Fig. 6a;
Fig. 7a shows a unit for moving one or more containers according to another embodiment of the present disclosure in a movement configuration;
Fig. 7b shows the unit of Fig. 7a in an insertion/extraction configuration;
Fig. 8 shows a unit for moving one or more containers according to another embodiment of the present disclosure in a movement configuration; and
Fig. 9 shows a unit for moving one or more containers according to another embodiment of the present disclosure in an insertion/extraction configuration.

### DETAILED DESCRIPTION

In overview, the disclosure relates to a unit for moving at least one container. The unit has an open top to allow a container to be inserted into/onto or extracted from the unit in a substantially vertical direction, and further allows a container to be inserted into/into or extracted from the unit via at least one lateral side of the unit (i.e. in a sideways direction, substantially perpendicular to the vertical direction). The unit is capable of being configured in a first configuration, otherwise known as an insertion/extraction configuration, whereby a container can be inserted or extracted in the substantially vertical direction via the open top of the unit. The unit is further capable of being configured in a movement configuration, whereby containers stored on the unit are arranged at a tilt angle with respect to the vertical direction. In more detail, the unit has at least one container support surface arranged to support containers that have been loaded onto/into the unit. The container support surface is configured to transition between a tilt angle and a non-tilt angle (i.e. a substantially horizontal or vertical arrangement), thereby causing the containers supported thereon to transition between a tilted configuration and a non-tilted configuration. In general, when the unit is in the movement configuration, the container support surface is tilted such that any containers supported thereon are in a tilted configuration with an oblique tilt angle with respect to the vertical direction. When the unit is in the insertion/extraction configuration, the container support surface is not tilted such that any containers supported thereon are in a non-tilted configuration, i.e. they are arranged in a substantially horizontal or vertical configuration.

When in the movement configuration, the unit is capable of transporting containers loaded thereon towards or away from a grid of an automated storage and retrieval system, or between any two or more other locations outside of the automated storage and retrieval system. When in the insertion/extraction configuration, the unit is arranged for vertical loading and unloading of containers, which may take place at a port column of a grid of an automated storage and retrieval system.

As described above, the unit is arranged so that any containers stored thereon are arranged in a tilted configuration when the unit is arranged in the movement configuration. The tilt direction is generally away from the lateral side of the unit via which containers can be laterally loaded or unloaded from the unit, for example by a human operator. In general, the tilt direction is towards an opposite side where the unit comprises one or more lateral support surfaces against which one or more sides of the containers can rest when the containers are in the tilted configuration.

By tilting the containers using the tiltable container support surface as disclosed herein, a stack of one or more containers loaded onto a unit has a smaller risk of slip or falling off of the unit during transport. This is because the containers are tilted and resting against both a base support surface and a lateral side support surface, thereby providing improved stability for the stack of containers compared to a vertical, un-tilted stack of containers resting only on a base support.

In addition, by configuring the unit such that it can transition between a tilted, movement configuration and an un-tilted, insertion/extraction configuration, the unit facilitates vertical loading and unloading of containers when required. For example, the unit can be positioned beneath a port column of a grid and configured in the insertion/extraction configuration, so that containers can easily be loaded or unloaded in the vertical direction via the open top of the unit, for example by robotic container-handling vehicles of an automated storage and retrieval system.

In general, the present disclosure relates to any unit for moving one or more containers, wherein the unit is configured to tilt containers loaded thereon when the unit is moving and is further configured to present the containers in an un-tilted configuration when the unit is located at a port of an automated storage and retrieval system. Such as unit facilitates effective insertion and retrieval of containers when the unit is located at the port, and also enables the containers to be transported safely when the unit is moving towards or away from the port.

In general, the transition between the tilted containers caused by a tilted support surface when the unit is in a movement configuration and a non-tilted (i.e. flat, substantially level with the horizontal, substantially normal to the vertical loading/unloading direction) support surface can be achieved using many different solutions, some of which are described herein merely as examples and embodiments of the present disclosure. The skilled person would appreciate that numerous other ways could be achieved that fall within the scope of the appended claims.

### Automated storage and retrieval system overview

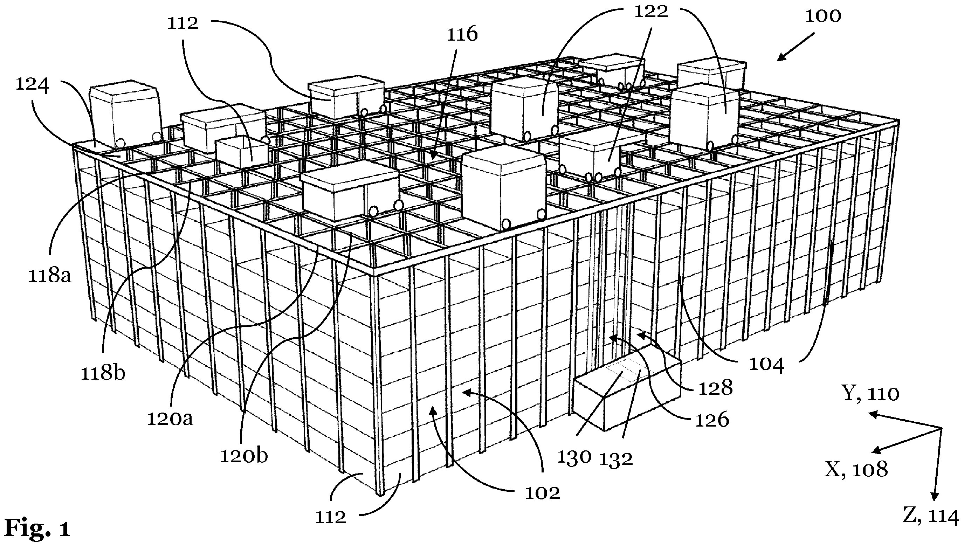

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

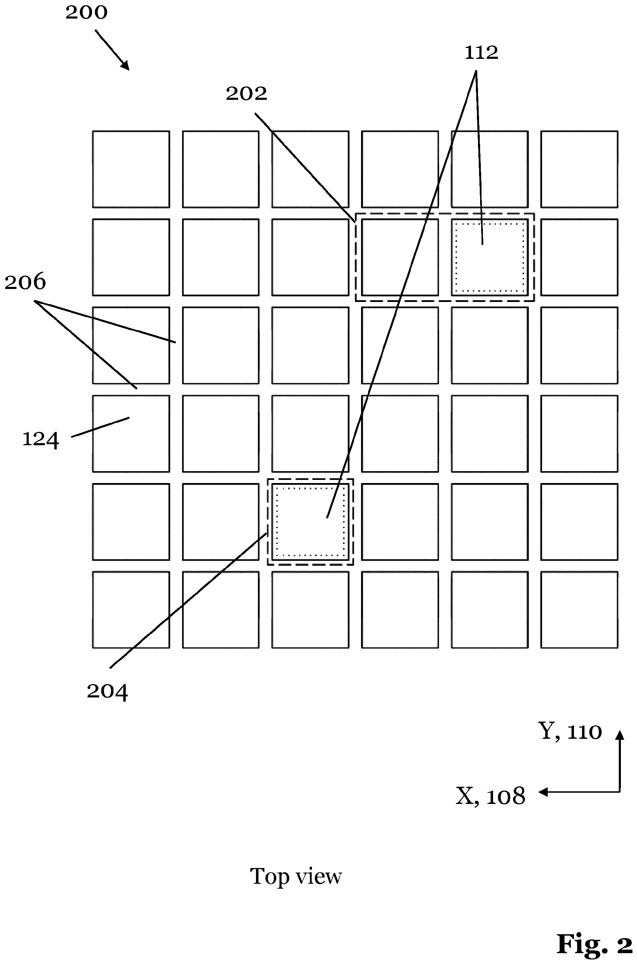

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

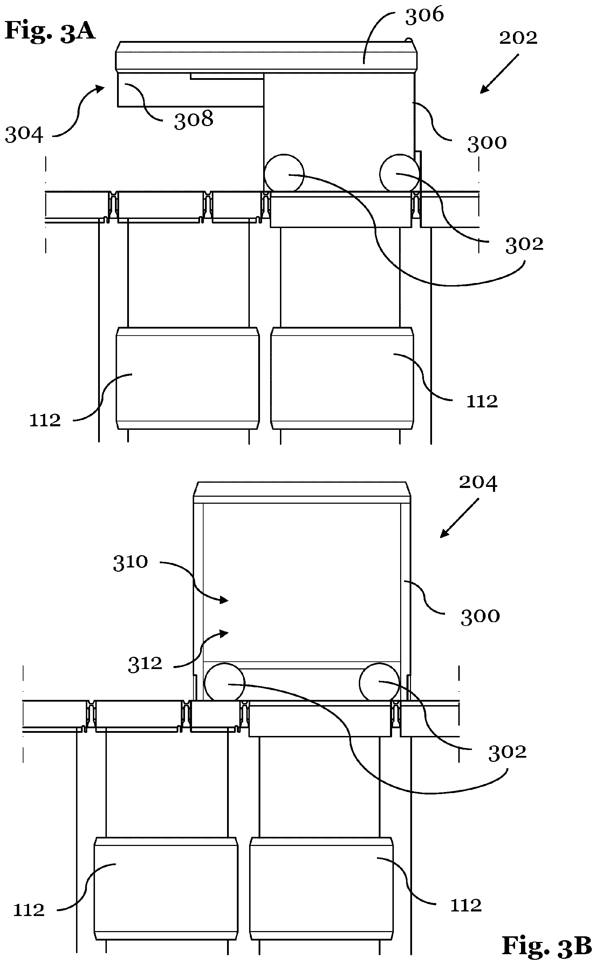

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

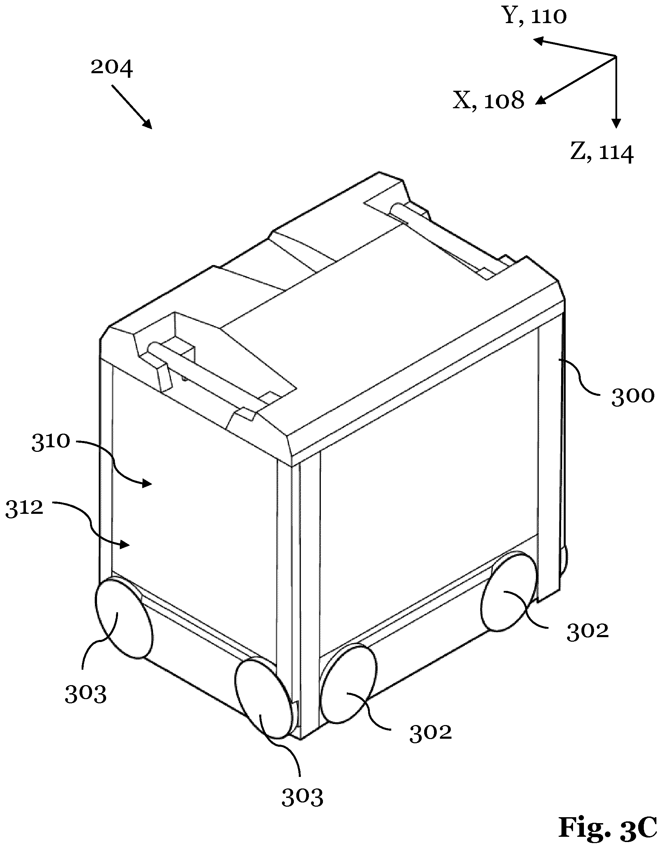

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

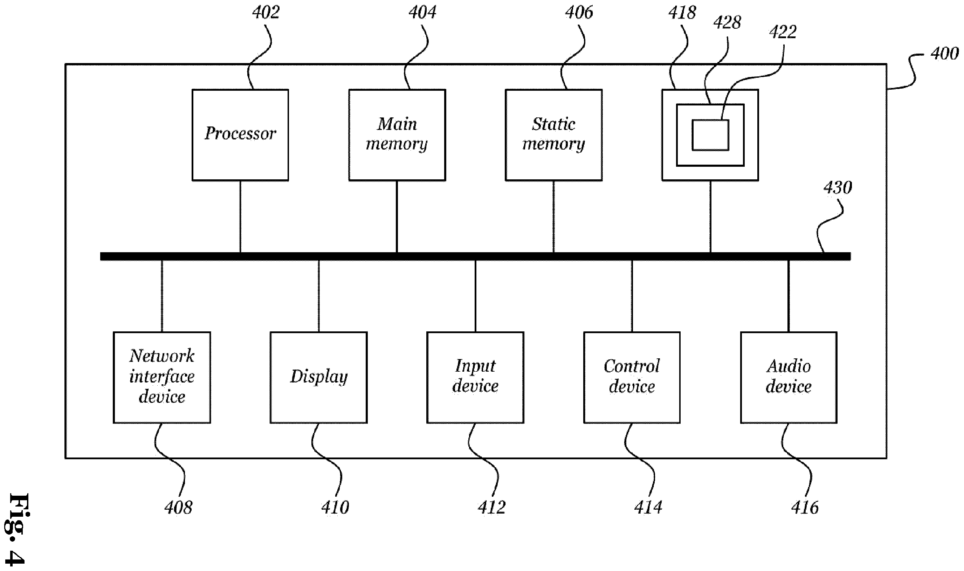

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

### Unit for moving containers

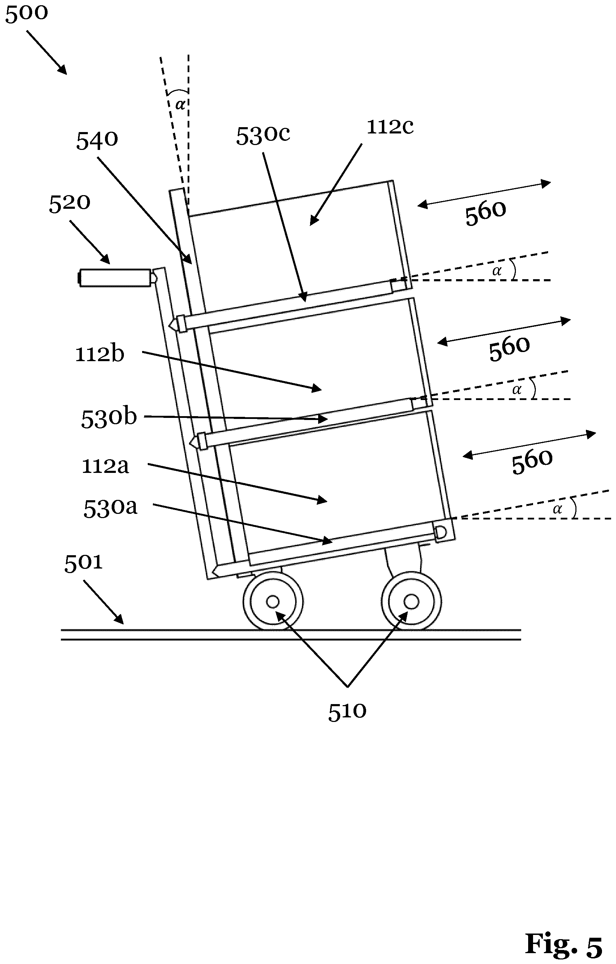

With reference to Fig. 5, an exemplary unit 500 for moving at least one container according to an embodiment of the present disclosure is shown. In more detail, Fig. 5 depicts the unit 500 in a movement configuration, wherein the unit is configured to transport one or more containers supported thereon. In the particular example shown, the unit 500 is a trolley comprising a plurality of wheels 510 that facilitate movement of the trolley and thus the transport of the containers supported on the trolley.

In some examples, the trolley 500 may comprise a drive system (not shown in the figure) connected to one or more of the wheels 510 such that the trolley may be self-propelled by the drive system. The drive system may comprise a power source, such as a battery, and a transmission system, such as an arrangement of motors, gears, pulleys or the like, for transmitting power to the wheels to drive the trolley. In other examples, the wheels may be freely spinning (i.e. not connected to a motorized drive system), and the trolley may comprise one or more handles 520 suitable for human operator to engage in order to push or pull the trolley along a surface (e.g. surface 501) on which the trolley wheels 510 are resting. In yet other examples, the trolley 500 may comprise one or more engaging surfaces or engaging portions (not shown in the figure) configured to be engaged by a transport vehicle, such as a robotic transport vehicle, that is configured to engage the trolley 500 and push/pull the trolley along the surface on which the trolley is resting.

In the particular example shown in Fig. 5, the trolley 500 comprises three vertically spaced container support surfaces 530a, 530b, 530c, each configured to support a respective container 112a, 112b, 112c. In more detail, each container support surface 530a, 530b, 530c is arranged to interface with a lower surface of a respective container when the container is received on the trolley 500. For example, a container support surface may be a base support surface configured to interface with and support the base of the container, however more generally a lower support surface may interface with and support any lower container surface that faces in a generally downwards direction.

In general, embodiments of the present disclosure extend to units for moving at least one container, wherein the unit (e.g. the trolley 500) comprises any number of container support surfaces each configured to support a respective container 112. Alternatively, a unit may comprise a single base support surface configured to support multiple containers that may arranged in a vertical stack or that may be arranged laterally on the support surface. In general, the unit may comprise any number of container support surfaces each configured to support any number of containers arranged laterally on the surface or stacked vertically.

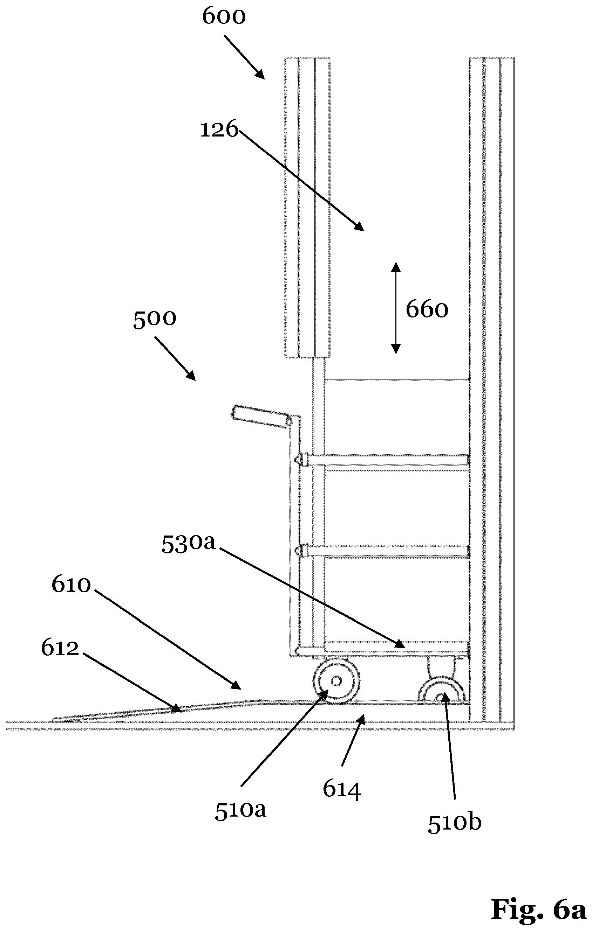

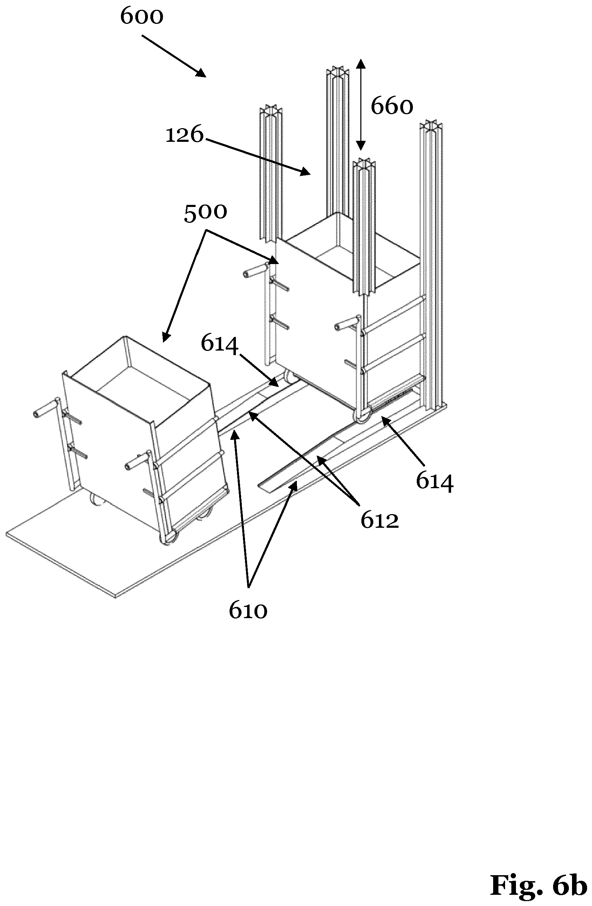

Referring back to the particular example shown in Fig. 5, each container support surface 530a, 530b, 530c is configured to support a respective container 112a, 112b, 112c. As shown in Figure 5, containers 112a, 112b, 112c are loaded onto the trolley 500 onto the respective support surfaces 530a, 530b, 530c. When in the movement configuration as shown in Fig. 5 (i.e. when the unit/trolley 500 is configured for movement to transport one or more containers loaded thereon), each container support surface is tilted at an angle *α* with respect to the horizontal. In general, angle *α* is oblique and acute. For example, the tilt angle for each container support surface when the unit is in the movement configuration may be any angle 0° < *α* ≤ 45°. Optionally, 0° < *α* ≤ 25°, and preferably 0° < *α* ≤ 10°. The tilt angle *α* may also be described with reference to a vertical insertion/extraction direction by which containers are vertically loaded onto or unloaded from the trolley by a robotic container-handling vehicle of an automated storage and retrieval system. The vertical loading and unloading of containers onto the trolley is described in more detail below with respect to Fig. 6, when the unit is in an insertion/extraction configuration.

Fig. 5 further shows that, in some examples, the trolley 500 comprises a lateral support surface 540 configured to at least partially support containers stored thereon when the trolley 500 is in a movement configuration. As described above and as shown in the figure, each container 122a, 112b, 112c is tilted at a tilt angle *α* by the respective support surfaces when the trolley is in the movement configuration. As such, in some embodiments, a side of each container 122a, 112b, 112c rests against the lateral support surface 540 due to the angle at which each angle is tilted with respect to the horizontal. In other words, the tilt of each container when the trolley 500 is in the movement configuration results in a gravity force vector component acting in parallel to the support surfaces 530a, 530b, 530c, causing the containers to at least partially rest due to gravity against both their respective base support surfaces 530a, 530b, 530c, and the lateral support surface 540. As a result of resting against both a base surface and a lateral surface, the containers may have improved stability and may be less likely to slip or fall off of the trolley when being transported, compared to being transported when resting on a flat (i.e. level, horizontal) surface. This may be particularly relevant when accelerating (i.e. going from stationary to moving at a steady speed) and decelerating (i.e. going from moving at a steady speed to stationary), when the containers stored on the trolley are at a higher risk of slipping or sliding on the base support surface and falling off of the trolley.

In general, the lateral support surface 540 may be a single component extending a length that corresponds to the height of the number of containers that can be vertically arranged on the trolley 500, such as the lateral support surface shown in Fig. 5. Alternatively, the lateral support may comprise separate elements forming separate support surfaces for each respective container, or each respective lower support surface 530. More generally, the lateral support for each container need not be a surface, but can be any element arranged to interface with a lateral surface of a container stored on the unit and arranged to at least partially support the container on the unit when the unit is in the movement configuration.

As shown in Fig. 5, the lateral support surface 540 is arranged on the trolley to interface with and support at least one lateral side of the containers 112a, 112b, 112c. In particular, the lateral support surface is arranged to support a lateral side of the containers that is tilted downwards when the trolley is in the movement configuration. In some examples, the lateral support surface 540 is located at least partially towards a lowest edge of the base support surface when in the movement configuration, such that the lateral support surface is arranged to support the downwardly-tilted lateral side of the containers.

On an opposite side to the lateral support surface 540 shown in Figure 5, the trolley 500 further comprises an open lateral side via which the containers 112a, 112b, 112c can be unloaded from or loaded onto the unit, e.g. by a human or robotic operator in a lateral direction indicated by arrows 560. The loading and unloading direction via the open lateral side is indicated by arrows 550a, 550b, 550, which are located on the opposite side to the lateral support surface. In general, the open side may be the lateral side of the trolley that faces upwards when the trolley is in the movement configuration, however in some examples the open lateral side may be adjacent to, instead of opposite to, the side of the trolley comprising the lateral support surface.

### Transition between tilted and non-tilted configurations at the port column

Referring now to Fig. 6a, the trolley 500 depicted in Fig. 5 is now shown in an insertion/extraction configuration and located beneath a port column 126 of a port 600 of a grid, such as a grid 100 as described above with reference to Fig. 1. As described above, port or access columns 126 may be used for the transfer of storage containers 112 into and out of the grid. In the embodiment shown, when in the insertion/extraction configuration whereby the trolley 500 is located beneath the port column 126, containers maybe loaded, i.e. inserted, onto or unloaded, i.e. extracted, from the trolley 500 in a substantially vertical direction (indicated by arrow 660) via an open top of the trolley 500. The tilt angle *α* described above with reference to Fig. 5 can therefore be described as a tilt angle with respect to the vertical loading/unloading direction 660, in addition to or instead of a tilt angle with respect to the horizontal plane.

In more detail, for loading/inserting, one or more robotic container-handling vehicles (e.g. robotic container-handling vehicles 122 as described above with reference to Fig. 1) located on top of the grid may lower containers 112 through the port column 126 onto a base support surface (e.g. 530a) of the trolley 500. Similarly, for unloading/extracting, the one or more robotic container-handling vehicles 122 may collect containers from the trolley 500 and raise them through the port column 126, in order to be stored in one of the storage columns of the grid.

Referring again to Fig. 6, the port 600 comprises a port column 126 as described above and further comprises a port base component 610. The port base component 610 is arranged beneath the port column 126 to receive the trolley 500 thereon when the trolley is moved into the insertion/extraction configuration. In other words, the port base component is arranged such that the trolley is supported on the port base component 610 when the trolley is in the insertion/extraction configuration.

Fig. 6a illustrates one particular example of a port base component 610, which comprises a first section configured to receive a first set 510a of one or more wheels of the trolley 500 thereon, and a second section configured to receive a second set 510b of one or more wheels of the trolley. In the particular example shown, the first section comprises one or more ramp portions 612 connected to respective elevated flat portions 614. The one or more ramp portions 612 are configured to receive the first set of wheels 510a of the trolley 500 when the trolley is moved into position beneath the port column 126. The one or more wheels of the first set 510a are raised to an elevated position as they travel up the ramp portions 612 and onto the elevated flat portions 614. Meanwhile, the one or more wheels of the second set 501b travel onto the second section of the base component 610, which, in the example shown in Fig. 6a and 6b, is flat and thus at a lower level compared to the elevated flat portions 614 of the first section of the port base component 610.

As a result of the relative height difference between the first and second sections of the port base component, onto which different sets of wheels of the trolley travel, the trolley tilts in a direction that counteracts (in other words opposes, or negates) the tilt angle *α* of the containers when the trolley is in the movement configuration. In other words, the port base component 610 causes the trolley 500 to transition between the movement configuration, whereby the containers are arranged at the tilt angle *α*, to the insertion/extraction configuration, whereby the containers are not tilted, i.e. *α* = zero (or substantially zero). As can be seen in Fig. 6a, each container is substantially level with the horizontal, i.e. not tilted at any oblique angle with respect to the horizontal or vertical directions, when the trolley is located beneath the port column 126 and in the insertion/extraction configuration.

The change between tilted containers in the movement configuration and non-tilted containers in the insertion/extraction configuration in the particular example shown in Fig. 6a and 6b is achieved by the port base component 610, and in particular the difference in height between the elevated flat portions 614 on which the first set 510a (in this case, the rear set of wheels) rest, and the non-elevated second section on which the second set 510b (the front set of wheels) rest. Fig. 6b shows a perspective view of the port 600 shown in Fig. 6a, further demonstrating how the first and second sections of the port base component cause the trolley to transition between the tilted movement configuration and non-tilted insertion/extraction configuration.

In general, port base component 610 may comprise any passive elements that are arranged receive the trolley and transition the trolley from the movement configuration to the in the insertion/extraction configuration, whereby the containers are thus presented to be inserted or extracted from the trolley in the substantially vertical direction (indicated by arrow 660). In other words, the port base component 610 may comprise any suitable elements configured to tilt the trolley towards the insertion/extraction configuration in such a way that counteracts the oblique tilt angle *α* of the containers when the trolley is in the movement configuration. For example, the port base component 610 may comprise ramps leading to elevated portions as described above, onto which a front or rear set of wheels are received. Alternatively, instead of raising a set of wheels above a ground height, the port base component 610 may comprise ramps leading to lowered portions (relative to a ground height) onto which a front or rear set of wheels of the trolley are received. In either case, and in general, the port base component may be arranged such that one or more sets of wheels of the trolley may be raised or lowered by differing relative amounts in order to effect a tilt of the trolley as a whole, thereby causing a tilt of the containers stored on the trolley to a non-tilted position.

In alternative embodiments, the port base component may comprise one or more active components arranged receive the trolley in the movement configuration and tilt the trolley towards the insertion/extraction configuration. For example, the port base component 610 may comprise a platform onto which the first set of wheels (e.g. the rear set) or the second set of wheels (e.g. the front set) are received when the trolley moves into position beneath the port column 126. The platform may be raised or lowered by a predetermined amount, thereby raising or lowering the front or rear set of wheels of the trolley by a corresponding amount and in turn effecting a tilt of the trolley. The predetermined amount by which the platform (and in turn, set of wheels of the trolley) is raised or lowered corresponds to the tilt angle *α* of the containers when in the movement configuration, such that actuation of the platform counteracts, i.e. negates or opposes, the tilt and moves the trolley into the insertion/extraction configuration. The platform may be actuated by any suitable actuator such as a hydraulic actuation system, solenoid, rack and pinion, pulley system, worm wheel, or any other suitable actuation system apparent to the skilled person that is suitable for raising or lowering a platform. In general, whilst only a front or rear set of wheels may be received on the platform, it is possible that both the front and rear sets of wheels are received on respective platforms that raise or lower the sets of wheels by differing relative amounts in order to effect the necessary tilt to cause the trolley to be placed in the insertion/extraction configuration.

### Transition between tilted and non-tilted configurations by the unit

### Conversion between tilt and non-tilt by unit

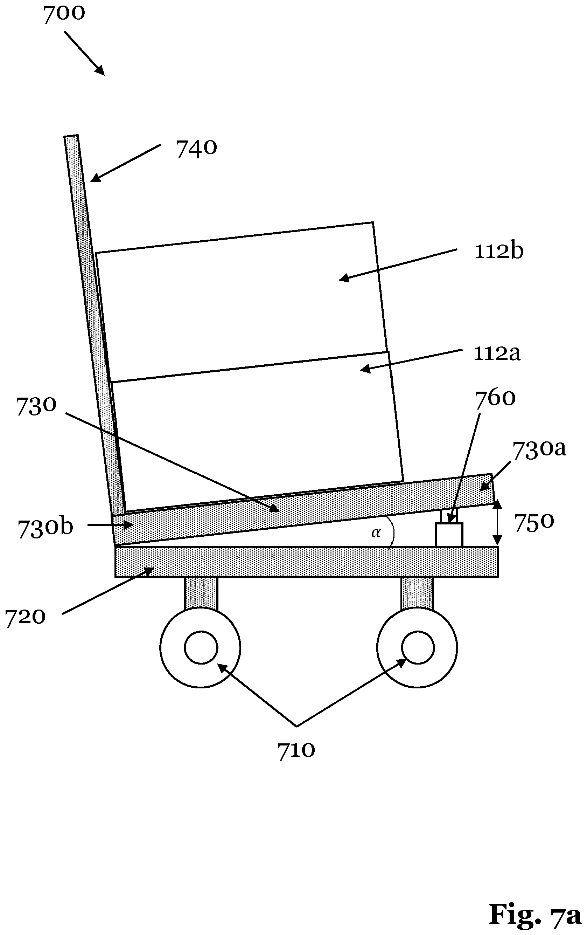

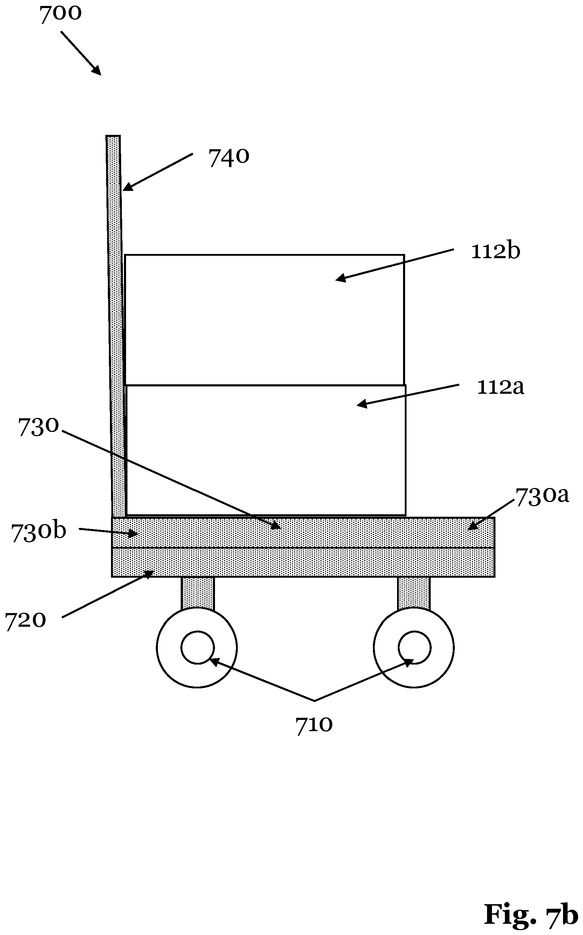

Referring now to Fig. 7a and Fig. 7b, a unit for moving one or more containers according to an alternative embodiment of the present disclosure is illustrated.

In this embodiment, the unit itself comprises means to enable the unit to transition between the movement (tilted) configuration and the insertion/extraction (non-tilted) configuration. In other words, in some embodiments, a port base component 610, or other external component, is not required to cause the trolley to transition between the movement and insertion/extraction configurations, since the unit itself carries the means to tilt and un-tilt the containers stored thereon.

In more detail, Fig. 7a depicts a side-on view of a trolley 700 according to an alternative embodiment of the disclosure in a movement configuration (i.e. a tilted configuration). The trolley 700 comprises a plurality of wheels 710 mounted to a base 720, and a lower support surface 730 mounted to the base 720. The lower support surface 730 is configured to support one or more vertically stacked containers 112 thereon. In the particular example shown in Fig. 7, the trolley is carrying two vertically stacked storage containers 112a, 112b. The trolley further comprises a lateral support surface 740 arranged on one side of the trolley against which containers supported by the lower support surface 730 rest when the trolley is in the movement configuration. As can be seen in Fig. 7a, the containers 112a and 112b are supported primarily on the lower support surface 730, but are also resting against the lateral support surface 740 due to the base support surface causing the containers to be tilted at an oblique tilt angle *α*.

With reference to Fig. 7b, the same trolley 700 is depicted in an insertion/extraction configuration, whereby the containers 112a, 112b supported by the unit are not tilted (or in other words, the tilt angle *α* = zero or substantially zero). In order to transition between the movement configuration shown in Fig. 7a and the insertion/extraction configuration shown in Fig. 7b, the trolley 700 comprises one or more actuators 760, such as a hydraulic actuator, electromagnetic actuator or a mechanical actuator, or any other suitable actuator apparent to the skilled person. The actuator may configured to cause movement in a substantially linear direction as indicated by arrow 750.

In the example shown, the actuator is arranged towards a first edge 730a of the lower support surface 730 and coupled between the lower support surface 730 and the fixed, horizontal base 720 of the trolley to which the wheels 710 are mounted. The base support surface is further pivotably coupled to the fixed base 720 at a point towards a second edge 730b, opposite to the first edge 730a, such that actuation of the actuator causes the first edge of the lower support surface 730 to be raised with respect to the fixed base 720, whilst the second edge of the base support surface remains pivotably anchored relative to the fixed base 720, thereby causing the lower support surface 730 to tilt with respect to the base 720.

Referring back to Fig. 7a, the actuator 760 is depicted in an extended position whereby the first edge 730a of the lower support surface 730 is raised with respect to the second edge 730b, causing the tilt of the base support surface, lateral support surface connected thereto, and the containers 112a, 112b supported thereon. In contrast, Fig. 7b depicts the actuator 760 in a retracted position (not visible in Fig. 7b), whereby the first and second edges 730a, 730b of the lower support surface 730 are substantially level (relative to the horizontal plane) and thus the trolley is not tilted.

The actuator 760 can therefore be used to control the transition between the movement (tilted configuration) and the insertion/extraction (un-tilted) configuration. To do so, the trolley 700 may comprise a controller configured to control the actuator according to the desired configuration. Alternatively, the trolley 700 may comprise a user interface configured for a human operator to input commands to cause the actuator to retract or extend according to whether the operator desires for the trolley to be in the tilted or un-tilted configurations. For example, a human operator may be transporting the trolley carrying containers from outside of a grid towards the grid whilst the trolley is in the movement (tilted) configuration (to ensure stability of the containers during transport). When the user arrives beneath a port column, he or she may input a command into the user interface of the trolley to cause the trolley to change to the un-tilted configuration, thus causing the actuator to retract and the trolley to return to an un-tilted position. Such a process may also be reversed when removing containers from the grid. In addition, either process may be automated and carried out by controllers executing instructions without requiring human input.

In an alternative embodiment, the actuator may be coupled between the lower support surface 730 and one set (i.e. either the front set 710a or rear sets 710b) of wheels of the trolley such that extension or retraction of the actuator causes the lower support surface 730 to pivot between a tilted and a non-tilted configuration. More generally, a unit for moving containers as disclosed herein may comprise any number of actuators arranged in any such way that enables containers to be tilted at an oblique tilt angle when the unit is in the movement configuration, and that further enables said containers to be loaded into or unloaded from the unit vertically when in an insertion/extraction direction.

### Alternative unit arrangements

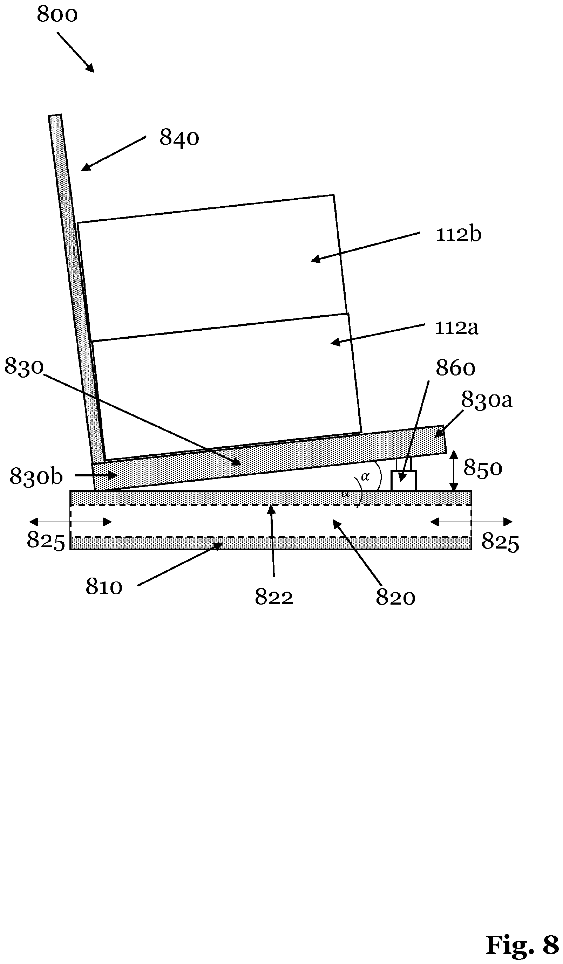

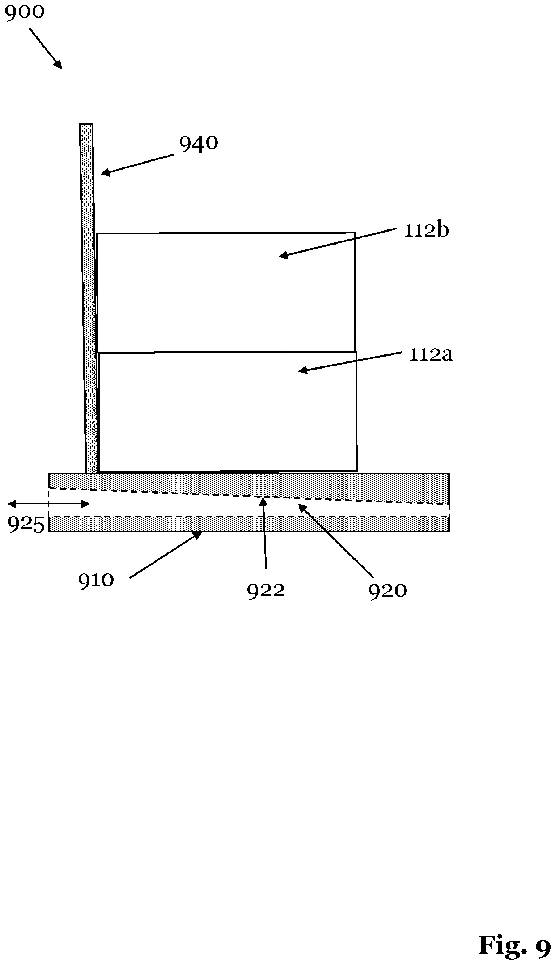

The embodiments described above relate to units such as trolleys or other vehicles comprising a plurality of wheels arranged to allow the unit to move (either by the wheels being driven by a drive system, or by an external force acting on the unit). However, in general, the present disclosure extends to any unit suitable for moving containers in a tilted arrangement when in a movement configuration and thus the units do not necessarily need wheels in order to facilitate the movement. Instead, in some embodiments, the unit may be a pallet, a box or any other structure that has a base arranged to interface directly with a floor surface (rather than interfacing with the floor via one or more wheels). In the following discussion of Figs. 8 and 9, two such exemplary units are described.

With reference to Fig. 8, a unit for moving one or more containers according to an embodiment of the present disclosure is shown. In this particular embodiment, the unit 800 is a pallet comprising a base 810 that is configured to be transported by a forklift mechanism, such as a forklift truck or a manually driven pallet truck. The base 810 comprises one or more fork entries 820 arranged to receive a fork of the forklift mechanism in a direction indicated by arrows 825. The one or more fork entries 820 each comprise an upper internal surface 822 arranged to interface with the forks of the forklift mechanism when received therein, such that the forklift mechanism can raise the pallet off the ground for transport between various locations.

The pallet 800 further comprises a lower support surface 830 arranged to support one or more containers, lateral support surface 840, and an actuator configured to effect a substantially linear movement indicated by arrow 850. The actuator is coupled between the lower support surface 830 and the base 810 towards a first end 830a of the lower support surface, and the lower support surface is pivotably coupled to the base 810 at a second, opposite end 830b in a substantially identical manner to the mechanism described with reference to Fig. 7.

In general, the function and operation of the tilting support surfaces of the pallet 800 are substantially identical to the function and operation of the trolley 700 described above with reference to Fig. 7. In particular, the actuator is configured to tilt the lower support surface 830 at a tilt angle *α* such that the containers supported thereon are tilted in a direction towards the lateral support surface 840, thereby providing improved stability for movement of the containers. The pallet 800 is therefore configured to be arranged in a movement configuration (the tilted configuration) for movement of the containers supported thereon. When in the un-tilted configuration, the lower support surface 830 is substantially level, i.e. horizontal, allowing the containers supported on the lower support surface to be extracted in a vertical direction as described above with reference to Figs. 6a and 6b. In a substantially identical manner to the description above in relation to Fig. 7, the tilt of the lower support surface 830 may be controlled by a user via a user interface, or may be automatically controlled by a controller.

With reference to Figure 9, an unit according to some other embodiments of the disclosure is depicted. In this particular embodiment, the unit is a pallet 900 comprising a base 910, one or more fork entries 920 and at least one lateral support surface 940 fixed to the base 910. The one or more fork entries comprise an upper internal surface 922 that is arranged at an oblique angle relative to the horizontal when the pallet is resting on a level (i.e. horizontal) floor surface, or when the pallet 900 is arranged in an insertion/extraction configuration (i.e. resting on a level floor surface beneath a port column 126). The upper internal surfaces 922 of the fork entries 920 are arranged such that, when the pallet 900 is picked up by a forklift mechanism (whereby the forks are received in the direction indicated by arrow 925), the forks of the forklift mechanism interface with the angled upper internal surfaces 922 and cause the pallet as a whole to pivot to a movement configuration whereby the pallet is tilted at a tilt angle *α* and is therefore arranged for stable movement of containers supported on the pallet. The tilt angle *α* corresponds to the angle made between the upper internal surfaces 922 and a horizontal plane when the pallet is resting on the floor (in the insertion/extraction configuration).

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A unit for moving at least one container when in a movement configuration, the unit having an open top for inserting or extracting a container in a substantially vertical direction when in an insertion/extraction configuration, wherein the unit is arranged to allow a container to be extracted from the unit via at least one lateral side of said unit, wherein the unit comprises a container support surface having a tilt angle arranged to tilt a container at an angle to the insertion/extraction direction when the unit is in the movement configuration.

2. A unit as claimed in claim 1 in which the support surface is arranged to transition between the tilt angle and a non-tilt angle.

3. A unit as claimed in claim 2 further comprising an actuator for transitioning the support surface between the tilt angle and the non-tilt angle.

4. A unit as claimed in claim 1 in which the support surface comprises a first tilt angle component and a second non-tilt angle component selectively actuatable for supporting a container.

5. A unit as claimed in any preceding claim comprising one of a moveable pallet, forklift and container moving vehicle.

6. A unit as claimed in claim 5 in which the moveable pallet includes a user actuator for transitioning the support surface between the tilt angle and a non-tilt angle.

7. A unit as claimed in any preceding claim arranged for moving a plurality of goods holders in a column, optionally wherein the containers are vertically arranged in the column.

8. A unit as claimed in any preceding claim further comprising a plurality of vertically spaced container supports.

9. An automated storage and retrieval system comprising a port for retrieval of a container stored in the system and arranged to receive a unit as claimed in any preceding claim.

10. A system as claimed in claim 9 in which the port includes an base component having a portion arranged to tilt the unit so as to receive or present containers in the insertion/extraction direction.

11. A system as claimed in claim 10 in which the portion comprises a tilted portion or a dip portion.

12. A system as claimed in claim 9 or 10 in which the port base is movable between a tilt position and non-tilt position, optionally wherein the port base tilt position is arranged to tilt the unit so as to present the unit contents in the insertion/extraction direction .

13. A system as claimed in any of claims 9-12 in which the port further includes unit guides for aligning the unit in the port.

14. A system as claimed in any of claims 9-13 further including a unit as claimed in any of claims 1-8.

15. A method of inserting or extracting at least one container into/from a unit as claimed in any of claims 1-8 at a port as claimed in any of claims 9-14 comprising docking the unit at the port to receive or present containers in the insertion/extraction direction, and inserting or extracting containers into/from the unit.
